# FASCICULE DE BREVET EUROPEEN

(11) **EP 0 511 058 B1**
(45) Date de publication et mention de la délivrance du brevet: **05.02.1997**
(21) Numéro de dépôt: 92401081.2
(22) Date de dépôt: 17.04.1992
(51) Int. Cl.: G02B 23/12, G02B 23/10, G02B 27/00, G02B 27/10, G02B 26/02

(54) **Mélangeur optique pour visuel de casque**
Optischer Mischer für Helmanzeige
Optical combiner for helmet display

(30) Priorité: 25.04.1991 FR 9105108
(43) Date de publication de la demande: 28.10.1992
(73) Titulaire: SEXTANT AVIONIQUE, F-92360 MEUDON LA FORET (FR)
(72) Inventeur: Gerbe, Jean-Pierre, F-92045 Paris la Défense (FR); Perbet, Jean-Noel, F-92045 Paris la Défense (FR)
(74) Mandataire: Chaverneff, Vladimir

(56) Documents cités:
- EP-A- 0 201 306
- EP-A- 0 206 324
- EP-A- 0 403 342
- FR-A- 2 665 267
- GB-A- 2 084 347
- GB-A- 2 247 537

## Description

La présente invention se rapporte à un mélangeur optique pour visuel de casque.

Les visuels de casque sont généralement utilisés dans les avions d'armes ou les hélicoptères. Parmi les différents types de visuels, il existe des visuels équipés de deux sources d'images : un tube cathodique et un tube intensificateur de lumière (pour la vision nocturne). Le tube cathodique est utilisé de jour et de nuit pour présenter une image synthétique (informations de pilotage, de navigation et de tir). Le tube intensificateur d'images est utilisé seulement de nuit pour permettre une vision de paysage nocturne sans éclairage. Les images des deux sources 'sont présentées devant les yeux du pilote à l'aide d'un système à optique de collimation commune aux deux canaux, ce qui nécessite un mélangeur dans le trajet optique afin de pouvoir superposer les images de ces deux sources. Ce miroir est généralement un miroir semi-réfléchissant.

Pour fonctionner correctement, ce visuel doit satisfaire les contraintes suivantes en ce qui concerne les proportions de lumière réfléchie et transmise par le mélangeur. Le tube intensificateur de lumière fournit une luminance de quelques Cd/m². La luminance de l'image fournie par l'intensificateur de lumière et considérée au niveau des yeux du pilote doit aussi être de quelques Cd/m². Cette dernière luminance est directement liée au coefficient de réflexion du mélangeur, coefficient qui doit donc être maximal. Le tube cathodique peut fournir une luminance de plusieurs milliers de Cd/m². De nuit, l'image de ce tube cathodique doit avoir une luminance de quelques Cd/m². Le coefficient de transmission du mélangeur peut donc être très faible dans ce cas. Ainsi, de nuit, les caractéristiques typiques du mélangeur sont : réflexion : 90% (pour l'intensificateur de lumière) et transmission : 10% (pour le tube cathodique). De jour, l'image du tube cathodique doit avoir une luminance de 1000 à 2000 Cd/m² pour être visible sur un fond très lumineux. Par conséquent, le mélangeur défini pour la nuit ne convient plus de jour car il atténue trop fortement la lumière du tube cathodique.

Du fait que les bandes spectrales des images émises par les tubes cathodiques sont très proches de celles des images émises par les tubes intensificateurs de lumière, on ne peut avoir recours à des mélangeurs sélectifs classiques, qui ne sont pas suffisamment sélectifs.

Selon une solution connue d'après la demande de brevet, EP-A-0 475 790, constituant de l'art antérieur dans le sens de l'article 54(3) CBE, on enlève le mélangeur en utilisation diurne, puisqu'alors la voie intensificateur de lumière n'est pas utilisée de jour. Mais les mécanismes classiques de déplacement ont des encombrements et des poids non négligeables et incompatibles avec des visuels de casque. En outre, la suppression du mélangeur dans le trajet optique entraînerait une variation du chemin optique, ce qui changerait la position des images présentées à l'utilisateur et obligerait de procéder à un réglage de ce chemin optique ou entraînerait une dégradation de la qualité de l'image.

On connaît d'après le document EP-A-206 324 un mélangeur à lame semi-réfléchissante associé à un intensificateur de lumière et à un tube cathodique, l'intensificateur étant enlevé en usage diurne, la lame semi-réfléchissante étant fixe.

La présente invention a pour objet un mélangeur pour visuel de casque du type précité, qui permette le passage de la vision diurne à la vision nocturne de la façon la plus simple possible, sans nécessiter de commande très précise, qui soit léger et peu encombrant.

Le mélangeur conforme à l'invention est un mélangeur optique pour visuel de casque du type à sources d'images, comportant un tube intensificateiir de lumière pour la vision nocturne, un tube cathodique pour la présentation d'une image synthétique et une lame à revêtement réfléchissant pour superposer les images respectives fournies par les deux tubes, étant caractérisé par le fait que cette lame est une lame de verre basculante à revêtement réfléchissant spectralement et angulairement sélectif, la lame étant arrangée afin de basculer entre une position où elle réfléchit presque totalement la lumière émise par le tube intensificateur, tout en atténuant fortement en transmission la lumière émise par le tube cathodique, et une position où elle transmet presque totalement la lumière émise par le tube cathodique. Selon un aspect avantageux de l'invention, ce revêtement peut être obtenu par la technologie des couches minces (dépôt sous vide) ou par la technologie de l'holographie.

De par la physique, ce type de revêtement est aussi angulairement sélectif. De façon avantageuse, la lame de verre bascule autour d'un axe passant par son centre.

La présente invention sera mieux comprise à la lecture de la description détaillée de plusieurs modes de réalisation, pris à titre d'exemples non limitatifs et illustrés par le dessin annexé, sur lequel :
- la figure 1 est un schéma optique de principe d'un visuel de casque de l'art antérieur ;
- la figure 2 est un schéma simplifié montrant le mélangeur de l'invention en position "nuit" ;
- la figure 3 est un diagramme de transmission spectrale du mélangeur de la figure 2 (en position "nuit") ;
- la figure 4 est un schéma simplifié montrant le mélangeur de l'invention en position "jour", ;
- la figure 5 est un diagramme de transmission spectrale du mélangeur de la figure 4 (en position "jour");
- la figure 6 est une vue simplifiée montrant la position optimale de l'axe de rotation du mélangeur de l'invention ; et
- la figure 7 est un schéma optique de principe d'un mode de réalisation du visuel de l'invention, permettant d'éliminer les défauts créés par les mouvements du mélangeur.

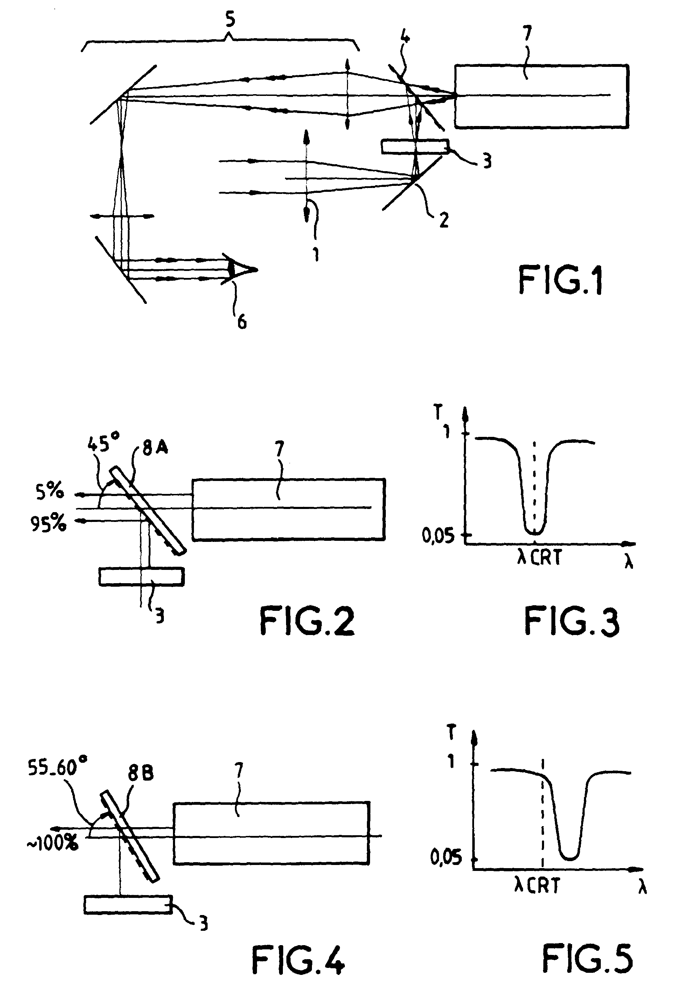

Le visuel représenté en figure 1 comporte un objectif 1 recevant des images extérieures nocturnes et les focalisant, via un miroir de renvoi 2, sur un tube intensificateur de lumière 3. Le faisceau de sortie du tube 3 est renvoyé par un mélangeur 4 (en réflexion) et une optique de collimation 5 à l'oeil 6 de l'utilisateur. L'optique de collimation comporte, de façon bien connue, plusieurs objectifs et miroirs de renvoi. Par ailleurs, le mélangeur 4, utilisé en transmission, transmet les images formées par un tube à rayons cathodiques 7.

Comme précisé ci-dessus, le mélangeur 4, pour pouvoir renvoyer utilement le faisceau du tube 3, atténue relativement peu en réflexion (d'environ 10%), mais atténue donc fortement en transmission, ce qui n'est pas gênant pour les images du tube cathodique 7 en utilisation nocturne, mais ne convient plus en utilisation diurne, pour laquelle il ne doit presque pas atténuer en transmission.

Le mélangeur de l'invention, qui est utilisé dans l'invention en lieu et place du mélangeur connu 4, est constitué par une lame de verre 8 comportant un revêtement réfléchissant spectralement et angulairement sélectif. Ce revêtement peut être réalisé par dépôt de couches minces optiques, et, de préférence, un dépôt dichroïque ou holographique. Ce type de traitement a une caractéristique de transmission spectrale très sélective que l'on peut choisir en fonction de la bande spectrale du tube cathodique utilisé. De plus, ce type de traitement est sélectif angulairement en réflexion, à savoir que pour une certaine gamme d'angles d'incidence faible (par exemple une incidence d'environ 45° à ± 5°) il est presque totalement réfléchissant (à 95% environ), et en dehors de cette gamme, il est pratiquement totalement transmetteur.

Ainsi, comme représenté en figure 2, en utilisation nocturne, le mélangeur est en position 8A. Pour cette position 8A, l'angle d'incidence du faisceau issu du tube 3 (de même que celui du faisceau issu du tube cathodique, qui est perpendiculaire au premier) par rapport à la surface de la lame du mélangeur est d'environ 45°. La caractéristique du revêtement du mélangeur est alors (pour une longueur d'onde de 545 nm par exemple) : réflexion 95% et transmission 5%. La courbe de transmission spectrale (figure 3) du mélangeur 8A présente un creux (à 5%) pour une gamme de longueurs d'onde étroite centrée sur une longueur d'onde pratiquement égale à la longueur d'onde de la lumière émise par le tube cathodique 7. En dehors de ce creux, la transmission est presque de 100%.

En utilisation diurne (figure 4), le mélangeur est en position 8B. Pour cette position 8B, l'angle d'incidence du faisceau issu du tube 3 (de même que celui du faisceau issu du tube 7) par rapport à la surface de la lame du mélangeur est d'environ 55 à 60°. Le coefficient de transmission du mélangeur est alors presque de 100%. Le creux de la courbe de transmission spectrale (figure 5) du mélangeur est alors situé au-delà de la longueur d'onde de la lumière émise par le tube cathodique. Par conséquent, il suffit de faire basculer le mélangeur d'environ 10 à 15° pour passer de la position "jour" à la position "nuit", et vice versa.

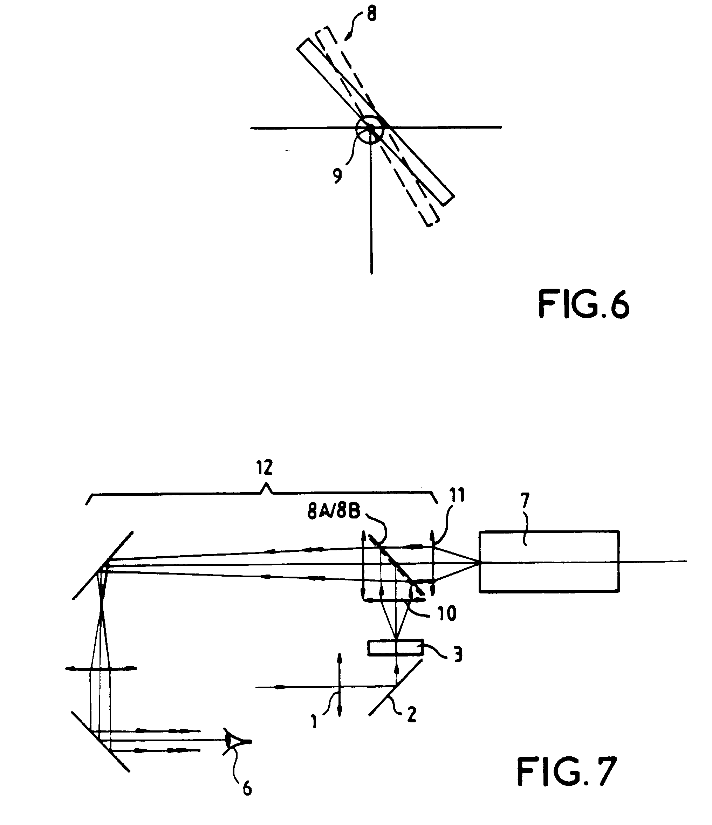

Pour limiter le plus possible le débattement du mélangeur, on peut le faire basculer autour d'un axe 9 (figure 6) passant par son centre. On limite ainsi le volume nécessaire au mélangeur.

Si la lame de verre sur laquelle est formé le mélangeur a une épaisseur de 2 mm par exemple, sa rotation d'un angle de 15° crée un déplacement de l'image réfléchie ou transmise de 0,2 mm environ. Pour éviter un tel déplacement, il faut placer le mélangeur dans une zone où l'image peut être considérée comme étant à l'infini.

Pour parvenir à une telle condition, on interpose entre les sources d'images et le mélangeur des optiques de collimation, comme représenté en figure 7. Sur cette figure, les éléments qui sont les mêmes que ceux des figures précédentes sont affectés des mêmes références numériques.

Les optiques de collimation additionnelles sont respectivement référencées 10 (celle interposée entre le tube 3 et le mélangeur 8) et 11 (celle interposée entre le tube 7 et le mélangeur 8). L'optique de collimation commune 5, qui était auparavant disposée en aval du mélangeur, peut maintenant être considérée comme englobant les optiques 10 et 11, et est référencée 12 sur la figure 7.

## Revendications

1. Mélangeur optique pour visuel de casque du type à sources d'images, comportant un tube (3) intensificateur de lumière pour la vision nocturne, un tube cathodique (7) pour la présentation d'une image synthétique et une lame (8) à revêtement réfléchissant pour superposer les images respectives fournies par les deux tubes (3,7), caractérisé par le fait que cette lame est une lame de verre basculante (8) à revêtement réfléchissant spectralement et angulairement sélectif, la lame étant arrangée afin de basculer entre une position (8A) où elle réfléchit presque totalement la lumière émise par le tube intensificateur, tout en atténuant fortement en transmission la lumière émise par le tube cathodique, et une position (8B) où elle transmet presque totalement la lumière émise par le tube cathodique.

2. Mélangeur selon la revendication 1, caractérisé par le fait que le revêtement de la lame de verre est réalisé par dépôt de couches minces optiques.

3. Mélangeur selon la revendication 1, caractérisé par le fait que le revêtement est un hologramme.

4. Mélangeur selon la revendication 2, caractérisé en ce que le revêtement est un dépôt dichroïque.

5. Mélangeur selon l'une des revendications 1 à 4, caractérisé par le fait que la lame de verre bascule autour d'un axe (9) passant par son centre.

6. Mélangeur selon la revendication 5, caractérisé en ce que l'angle de basculement de la laine de verre est d'environ 10 à 15°.

7. Mélangeur selon l'une des revendications précédentes, caractérisé par le fait que l'on interpose entre le mélangeur et chacun des tubes (3, 7) une optique de collimation (10, 11).

## Patentansprüche

1. Optisches Mischorgan für ein Helmsichtgerät mit Lichtquellen, nämlich einer Lichtverstärkerröhre (3) für die Nachtsicht und einer Kathodenstrahlröhre (7) für die Erzeugung eines synthetischen Bilds, wobei ein Plättchen (8) mit einer reflektierenden Beschichtung die von den beiden Röhren (3, 7) gelieferten Bilder überlagert, dadurch gekennzeichnet, daß dieses Plättchen ein schwenkbares Glasplättchen (8) mit einer spektral und winkelmäßig selektiven reflektierenden Beschichtung ist und so angeordnet ist, daß es zwischen einer Stellung (8A), in der es nahezu vollständig das von der Lichtverstärkerröhre ausgesendete Licht reflektiert und das von der Kathodenstrahlröhre ausgesendete Licht in Durchlaßrichtung stark dämpft, und einer Stellung (8B) geschwenkt werden kann, in der es nahezu vollständig das von der Kathodenstrahlröhre ausgesendete Licht durchläßt.

2. Mischorgan nach Anspruch 1, dadurch gekennzeichnet, daß die Beschichtung des Glasplättchens durch Aufbringen dünner optischer Schichten realisiert wird.

3. Mischorgan nach Anspruch 1, dadurch gekennzeichnet, daß die Beschichtung ein Hologramm ist.

4. Mischorgan nach Anspruch 2, dadurch gekennzeichnet, daß die Beschichtung eine dichroitische Schicht ist.

5. Mischorgan nach einem der Ansprüche 1 bis 4, dadurch gekennzeichnet, daß das Glasplättchen um eine Achse (9) schwenkt, die durch sein Zentrum verläuft.

6. Mischorgan nach Anspruch 5, dadurch gekennzeichnet, daß der Schwenkwinkel des Glasplättchens etwa 10 bis 15° beträgt.

7. Mischorgan nach einem der vorhergehenden Ansprüche, dadurch gekennzeichnet, daß zwischen das Mischorgan und jede der Röhren (3, 7) eine Kollimationsoptik (10,11) eingefügt ist.

## Claims

1. Optical mixer for a helmet-mounted sight of the type with image sources, including a light intensifier tube (3) for night vision, a cathode-ray tube (7) for presenting a synthetic image and a plate (8) with a reflective coating for superimposing the respective images supplied by the two tubes (3, 7), characterized in that this plate is a tilting glass plate (8) with a reflective coating which is selective in terms of spectrum and angle, the plate being arranged so as to tilt between a position (8A) where it reflects almost all the light emitted by the intensifier tube, while greatly attenuating, in terms of transmission, the light emitted by the cathode-ray tube, and a position (8B) in which it transmits almost all the light emitted by the cathode-ray tube.

2. Mixer according to Claim 1, characterized in that the coating of the glass plate is formed by depositing optical thin films.

3. Mixer according to Claim 1, characterized in that the coating is a hologram.

4. Mixer according to Claim 2, characterized in that the coating is a dichroic deposition.

5. Mixer according to one of Claims 1 to 4, characterized in that the glass plate tilts about an axis (9) passing through its centre.

6. Mixer according to Claim 5, characterized in that the angle of tilt of the glass plate is about 10 to 15°.

7. Mixer according to one of the preceding claims, characterized in that collimating optics (10, 11) are interposed between the mixer and each of the tubes (3, 7).
